# EUROPÄISCHE PATENTANMELDUNG

(11) **EP 3 415 944 A1**
(43) Veröffentlichungstag der Anmeldung: **19.12.2018**
(21) Anmeldenummer: 17176380.8
(22) Anmeldetag: 16.06.2017
(51) Int. Cl.: G01S 7/497, G01S 7/481

(54) **OPTISCHER SENSOR**

(71) Anmelder: Leuze electronic GmbH + Co. KG, 73277 Owen/Teck (DE)
(72) Erfinder: Feller, Bernhard, 86316 Friedberg (DE)
(74) Vertreter: Ruckh, Rainer Gerhard

(57) **Zusammenfassung**

Die Erfindung betrifft einen optischen Sensor mit einer Sende-/Empfangseinheit (10), welche einen einen Sendepfad (11) ausbildenden Sendelichtstrahlen emittierenden Sender (4) und einen einen Empfangspfad (12) ausbildenden Empfangslichtstrahlen empfangenden Empfänger (5) aufweist. Mit der Sende-/Empfangseinheit (10) ist eine Referenzstrecke ausgebildet, mittels der durch Erfassung eines Referenzobjekts (3) eine Funktionsprüfung von Komponenten des optischen Sensors durchführbar ist. Die Referenzstrecke ist mittels eines elektrisch gesteuerten optischen Shutters zuschaltbar.

## Beschreibung

Die Erfindung betrifft einen optischen Sensor gemäß dem Oberbegriff des Anspruchs 1.

Ein derartiger optischer Sensor dient zur Erfassung von Objekten in einem Überwachungsbereich. Für diese Objekterfassung weist der optische Sensor als Messstrecke eine Sende-/Empfangseinheit mit wenigstens einem Sendelichtstrahlen emittierenden Sender und wenigstens einem Empfangslichtstrahlen empfangenden Empfänger auf, wobei der die Sendelichtstrahlen emittierende Sender einen Sendepfad und der die Empfangslichtstrahlen empfangenden Empfänger einen Empfangspfad ausbildet.

Die Genauigkeit der Objektdetektion kann durch Funktionsbeeinträchtigungen von Bauteilen des optischen Sensors aufgrund von externen Störeinflüssen wie Temperatureffekten oder aufgrund von Alterungseffekten reduziert sein.

Um derartige Funktionsbeeinträchtigungen zu kompensieren ist es bekannt, den optischen Sensor dahingehend weiterzubilden, dass neben der Messstrecke zur Objekterfassung eine Referenzstrecke zur Durchführung von Referenzmessungen vorgesehen ist.

In der DE 40 02 356 C1 ist für einen optischen Sensor in Form eines Distanzsensors eine derartige Referenzstrecke mit einem zusätzlichen Lichtsender beschrieben. Ein derartiger Lichtsender als zusätzliches aktives optisches Bauelement führt jedoch zu einem unerwünschten hohen konstruktiven Mehraufwand.

Aus der DE 43 41 080 C1 ist ein optischer Sensor in Form eines scannenden Distanzsensors bekannt. Bei diesem optischen Sensor werden von einem Sender emittierte Sendelichtstrahlen mittels einer Ablenkvorrichtung periodisch abgelenkt, so dass sie eine Abtastfläche überstreichen, innerhalb derer eine Detektion von Objekten erfolgt. Außerhalb dieser Abtastfläche ist ein Testobjekt angeordnet, wobei zur Durchführung von Testmessungen die Sendelichtstrahlen des Senders auf dieses Testobjekt geführt sind.

Nachteilig hierbei ist, dass in dem Bereich, in welchem die Sendelichtstrahlen auf das Testobjekt geführt sind, keine Objektdetektionen durchgeführt werden können, das heißt durch das Testobjekt ist die Größe der für die Objektdetektion genutzte Abtastfläche begrenzt.

Der Erfindung liegt die Aufgabe zugrunde, einen optischen Sensor der eingangs genannten Art bereitzustellen, welcher eine hohe Funktionssicherheit aufweist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft einen optischen Sensor mit einer Sende-/Empfangseinheit. Der Sensor weist einen einen Sendepfad ausbildenden Sendelichtstrahlen emittierenden Sender und einen einen Empfangspfad ausbildenden Empfangslichtstrahlen empfangenden Empfänger auf. Mit der Sende-/Empfangseinheit ist eine Referenzstrecke ausgebildet. Mittels dieser ist durch Erfassung eines Referenzobjekts eine Funktionsprüfung von Komponenten des optischen Sensors durchführbar. Die Referenzstrecke ist mittels eines elektrisch gesteuerten optischen Shutters zuschaltbar.

Bei dem erfindungsgemäßen optischen Sensor wird mit der Sende-/Empfangseinheit sowohl die Messstrecke zur Objektdetektion als auch die Referenzstrecke zur Durchführung von Testmessungen, anhand derer eine Funktionsprüfung von Komponenten des optischen Sensors, insbesondere der Sende-/Empfangseinheit selbst durchgeführt wird, realisiert.

Dadurch sind zur Durchführung der Funktionsprüfungen keine separaten optischen aktiven Elemente insbesondere keine zusätzlichen Sender und Empfänger erforderlich.

Durch die Referenzstrecke wird die Funktionssicherheit des optischen Sensors erheblich erhöht, da mit diesen Funktionsbeeinträchtigungen von Komponenten des optischen Sensors, insbesondere der Sende-/Empfangseinheit, die durch äußere Störeinflüsse wie Temperatureinflüsse oder Alterungen von Bauelementen bedingt sind, aufgedeckt werden können.

Ein wesentlicher Aspekt der Erfindung besteht darin, dass die Referenzstrecke mittels eines elektrisch gesteuerten optischen Shutters zuschaltbar ist. Dies wird durch entsprechende elektrische Umschaltmittel bewirkt. Vorteilhaft hierbei ist, dass diese elektrische Umschaltung keine beweglichen Teile benötigt, so dass die Umschaltung verschleißfrei arbeitet und auch keine nennenswerte Erhöhung des konstruktiven Aufwands bedingt.

Die Zuschaltung der Referenzstrecke über den optischen Shutter erfolgt zeckmäßig in einem vorgegebenen Zeittakt, so dass die mit der Referenzstrecke durchgeführten Funktionsprüfungen vorzugsweise periodisch erfolgen, wodurch der optische Sensor während seiner gesamten Betriebsdauer fortlaufend getestet werden kann. Mit dieser fortlaufenden Testung des optischen Sensors kann eine wesentliche Anforderung für den Einsatz des optischen Sensors im Bereich der Sicherheitstechnik erfüllt werden.

Ein weiterer Vorteil der Erfindung besteht darin, dass die mit der Referenzstrecke durchgeführten Funktionsprüfungen die mit der Messstrecke durchgeführten Objektdetektionen nicht beeinträchtigen. Insbesondere wird durch die Referenzstrecke keine Einschränkung des mit der Messstrecke erfassten Überwachungsbereichs erhalten. Dies wird auf einfache Weise durch die Zuschaltung der Referenzstrecke über den optischen Sensor realisiert. Ist nämlich die Referenzstrecke nicht zugeschaltet, so ist allein die Messstrecke aktiviert, so dass mit dieser, völlig unbeeinträchtigt von der Referenzstrecke beziehungsweise der mit dieser durchgeführten Funktionsprüfungen, Objektdetektionen durchgeführt werden können.

Generell ist mittels des optischen Shutters der Sendepfad und/oder der Empfangspfad der Referenzstrecke zuschaltbar.

Der optische Shutter kann somit an die Ausbildung der Referenzstrecke angepasst sein, sodass zur Zuschaltung der Referenzstrecke der optische Shutter nur auf den Sendepfad oder den Empfangspfad einwirkt. Alternativ kann der optische Shutter auch auf den Sendepfad und den Empfangspfad einwirken um so die Referenzstrecke zuzuschalten.

Gemäß einer vorteilhaften Ausgestaltung der Erfindung ist ein weiterer optischer Shutter vorgesehen, mittels dessen die Messstrecke anschaltbar ist.

Insbesondere ist mittels des weiteren optischen Shutters die Messstrecke nur dann abgeschaltet, wenn mittels des optischen Shutters die Referenzstrecke zugeschaltet ist.

Dadurch wird eine zeitliche Trennung von mit der Referenzstrecke durchgeführten Referenzmessungen einerseits und mit der Messstrecke durchgeführten Objektdetektionen andererseits erhalten, wodurch eine gegenseitige Beeinflussung von Referenzmessungen und Objektdetektionen ausgeschlossen ist.

Wie bei dem optischen Shutter zum Zuschalten der Referenzstrecke können mittels des weiteren optischen Shutters der Sendepfad und/oder der Empfangspfad der Messstrecke abschaltbar sein.

Gemäß einer alternativen Ausgestaltung können die Referenzmessungen mit der Referenzstrecke auch während der mit der Messstrecke durchgeführten Objektdetektionen durchgeführt werden, wobei in diesem Fall auf den zweiten optischen Shutter verzichtet werden kann.

Um in diesem Fall eine gegenseitige Beeinflussung von Objektdetektionen und Referenzmessungen zu vermeiden, können beispielsweise statischen optischen Messsignalen zur Objektdetektion dynamische Referenzsignale zur Durchführung der Referenzmessungen aufinoduliert werden, wobei in einer geeigneten Signalauswertung die statischen Messsignale wieder von den Referenzsignalen getrennt werden.

Gemäß einer vorteilhaften Ausgestaltung der Erfindung ist der oder jeder optische Shutter von einem elektrooptischen Element gebildet.

Derartige elektrooptische Elemente erfordern keinerlei mechanisch bewegte Teile und ermöglichen schnelle und präzise Umschaltvorgänge.

Beispielsweise kann ein derartiges elektrooptisches Element von einem LCD-Element gebildet sein. Diese LCD-Elemente können vor einem Spiegel oder in einem Spiegel integriert sein um so elektrooptisch schaltbare Spiegel bereitzustellen.

Weiterhin kann der oder jeder optische Shutter in Form einer elektrooptischen Ablenkeinrichtung ausgebildet sein.

Diese kann in Form eines akustooptischen Gitters ausgebildet sein. Weiterhin kann diese aus Elementen mit einem elektrisch oder magnetisch steuerbaren Brechungsindex gebildet sein.

Schließlich kann der oder jeder Sensor ein schaltbares elektromechanisches Element aufweisen.

Beispielsweise ist das elektromechanische Element von einem Spiegel gebildet, dessen Auslenkung steuerbar ist.

Eine Umschaltung des Strahlengangs von Sendelichtstrahlen oder Empfangslichtstrahlen erfolgt in diesem Fall durch eine elektrisch oder magnetisch bewirkte Auslenkung des Spiegels.

Der erfindungsgemäße optische Sensor ist generell nicht beschränkt auf eine Referenzstrecke. Vielmehr kann dieser auch mehrere Referenzstrecken aufweisen.

Weiterhin ist eine Erweiterung derart möglich, dass der optische Shutter aus einer Anordnung von hintereinander geschaltenen Shutterelementen besteht, welche jeweils als lichtdämpfende Elemente ausgebildet sind.

Dabei sind die Shutterelemente einzeln oder in Gruppen zuschaltbar.

Durch unterschiedliche Ansteuerungen der einzelnen Shutterelemente können die Sendelichtstrahlen beziehungsweise Empfangslichtstrahlen unterschiedlich gedämpft oder auch moduliert werden, um so definierte Referenzsignale zur Durchführung von Referenzmessungen zu erzeugen. Beispielsweise können derartige Anordnungen von Shutterelementen durch einen vielschichtigen Aufbau von LCD-Elementen realisiert werden.

Gemäß einer ersten Ausgestaltung des optischen Sensors weist die Sende-/Empfangseinheit nur einen Sender auf, welche Sendelichtstrahlen in einer fest vorgegebenen Raumrichtung in den Überwachungsbereich aussendet.

Im einfachsten Fall weist der optische Sensor in diesem Fall auch nur einen Empfänger auf. Generell kann der optische Sensor auch mehrere Empfänger aufweisen.

Der optische Sensor kann dann beispielsweise als Lichttaster, Lichtschranke ausgebildet sein. Alternativ kann der optische Sensor auch als Distanzsensor ausgebildet sein, wobei die Distanzmessung nach dem Puls-Laufzeit-Verfahren, Phasenmessverfahren oder nach dem Triangulationsprinzip erfolgen.

Gemäß einer weiteren Ausgestaltung ist der optische Sensor als Lichtvorhang mit mehreren Paaren von Sendern und Empfängern ausgebildet. Jeweils ein Sender und ein Empfänger bilden eine Messstrecke aus.

Der Lichtvorhang kann dabei nach dem Lichtschrankenprinzip arbeiten. In diesem Fall sind die Sender in einem ersten Gehäuse an einem ersten Rand des Überwachungsbereichs und die Empfänger an einem zweiten Gehäuse am gegenüberliegenden Rand des Überwachungsbereichs angeordnet. Bei freiem Überwachungsbereich gelangen die Sendelichtstrahlen der Sender ungehindert zu den gegenüberliegend angeordneten, zugeordneten Empfängern. Alternativ kann der Lichtvorhang nach dem Reflexionslichtschrankenprinzip arbeiten. In diesem Fall sind alle Sender und Empfänger in einem Gehäuse am ersten Rand des Überwachungsbereichs angeordnet. Am gegenüberliegenden Rand des Überwachungsbereichs befindet sich ein Reflektor. Bei freiem Überwachungsbereich gelangen die von den Sendern emittierenden Sendelichtstrahlen ungehindert zum Reflektor und werden von diesem als Empfangslichtstrahlen zurück zum jeweils zugeordneten Empfänger geführt. Bei beiden Varianten erfolgt eine Objektdetektion durch eine Strahlunterbrechung von Sendelichtstrahlen.

Bei diesen Ausführungsformen ist den einzelnen Messstrecken einzeln nacheinander eine Referenzstrecke zugeschaltet.

Gemäß einer weiteren Ausgestaltung sind bei dem optischen Sensor die Sendelichtstrahlen des Senders periodisch innerhalb des Überwachungsbereichs geführt.

Der optische Sensor bildet somit einen Scanner. Insbesondere kann der optische Sensor als scannender Distanzsensor ausgebildet sein.

Gemäß einer ersten Variante kann der optische Sensor eine stationär angeordnete Sende-/Empfangseinheit mit einem Sender und einem Empfänger aufweisen, wobei der Sende-/Empfangseinheit eine Ablenkvorrichtung zugeordnet ist, mittels derer die Sendelichtstrahlen periodisch innerhalb des Überwachungsbereichs geführt sind. Die Ablenkvorrichtung kann von einem motorisch getriebenen, um eine Drehachse drehbaren Spiegel gebildet sein.

Gemäß einer zweiten Variante kann die Sende-/Empfangseinheit in einem rotierenden Messkopf integriert sein,

In beiden Fällen kann ein Ablenkbereich der Sendelichtstrahlen um 360° realisiert werden, da die Referenzstrecke über den optischen Shutter nur zeitweise zugeschaltet wird.

Die Erfindung wird im Folgenden anhand der Zeichnungen erläutert. Es zeigen:
- Figur 1:: Schematische Darstellung eines optischen Sensors in Form eines Lichtsenders.
- Figur 2:: Erstes Ausführungsbeispiel des erfindungsgemäßen optischen Sensors.
- Figur 3:: Zweites Ausführungsbeispiel des erfindungsgemäßen optischen Sensors.
- Figur 4:: Drittes Ausführungsbeispiel des erfindungsgemäßen optischen Sensors.
- Figur 5:: Zeitdiagramme von Signalen des optischen Sensors gemäß Figur 4.
- Figur 6:: Ausführungsform eines optischen Shutters für den erfindungsgemäßen optischen Sensor.

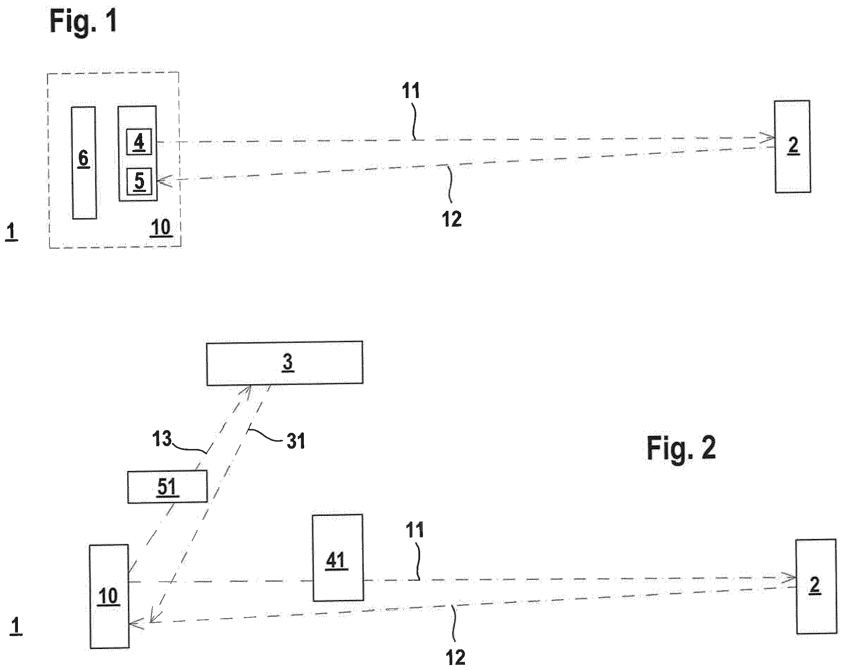

Figur 1 zeigt den Aufbau eines optischen Sensors 1 in Form eines Lichttasters zur Detektion von Objekten 2 in einem Überwachungsbereich. Der Lichttaster umfasst eine Sende-/Empfangseinheit 10 mit einem Sender 4 und einem Empfänger 5. Die Ansteuerung des Senders 4 und die Auswertung von Empfangssignalen des Empfängers 5 erfolgt in einer Auswerteeinheit 6.

Die vom Sender 4 emittierten Sendelichtstrahlen bilden einen Sendepfad 11 einer Messstrecke des optischen Sensors. Treffen die Sendelichtstrahlen auf ein Objekt 2, werden diese als Empfangslichtstrahlen zum Empfänger 5 reflektiert. Die Empfangslichtstrahlen bilden einen Empfangspfad 12 der Messstrecke des optischen Sensors 1.

In der Auswerteeinheit 6 wird eine Schwellwertbewertung der Pegel der Empfangssignale des Empfängers 5 durchgeführt. Auf diese Weise wird ein Objektfeststellungssignal generiert, das als binäres Schaltsignal ausgebildet ist, dessen Schaltzustände angeben, ob ein Objekt 2 im Überwachungsbereich erstanden ist oder nicht.

Erfindungsgemäß ist der optische Sensor 1 dahingehend erweitert, dass Mittel zur Funktionsprüfung von Komponenten des optischen Sensors 1, insbesondere der Sende-/Empfangseinheit 10, vorgesehen sind. Die Figuren 2 - 4 zeigen hierzu drei verschiedene Ausführungsformen. Generell erfolgt dort eine Funktionsprüfung von Komponenten durch Referenzmessungen gegen ein Referenzobjekt 3. Das Referenzobjekt 3 weist eine Oberfläche mit einer definierten Reflektivität auf und befindet sich in einem vorbekannten, definierten Abstand zur Sende-/Empfangseinheit 10. Das Referenzobjekt 3 ist mit den weiteren Komponenten des optischen Sensors 1 in einem Gehäuse integriert. Die Funktionsprüfungen sind eine wesentliche Voraussetzung für den Einsatz des optischen Sensors 1 im Bereich der Sicherheitstechnik. Zur Erfüllung der normativen Anforderungen im Bereich der Sicherheitstechnik weist die Auswerteeinheit 6 zudem einen redundanten Aufbau, vorzugsweise in Form zweier sich gegenseitig überwachender Rechnereinheiten, auf.

Erfindungsgemäß wird die Sende-/Empfangseinheit 10 des optischen Sensors 1 nicht nur zur Objektdetektion sondern auch zur Durchführung der Referenzmessung genutzt. Dementsprechend führt von der Sende-/Empfangseinheit 10 ein von Sendelichtstrahlen des Senders 4 gebildeter Referenz-Sendepfad 13 zum Referenzobjekt 3 für die Referenzmessung.

Erfindungsgemäß ist die Referenzstrecke mit elektrischen Umschaltmitteln zu vorgegebenen Zeiten zuschaltbar, so dass, vorzugsweise in vorgegebenen Zeitintervallen, Referenzmessungen durchführbar sind. Prinzipiell kann während der Referenzmessung die Messstrecke aktiv bleiben, das heißt auch während der Referenzmessung erfolgt eine Objektdetektion. Bei den Ausführungsformen der Figuren 2 - 4 sind jedoch weitere elektrische Umschaltmittel vorgesehen, mittels derer nur während der Durchführung der Referenzmessung die Messstrecke deaktiviert ist.

Bei der Ausführungsform der Figur 2 ist als erstes Umschaltmittel im Referenz-Sendepfad 13 der Referenzstrecke ein elektrisch gesteuerter optischer Shutter 51 vorgesehen. Als weiteres Umschaltmittel ist ein weiterer elektrisch gesteuerter optischer Shutter 41 im Sendepfad 11 der Messstrecke vorgesehen. Die optischen Shutter 41, 51 werden von der Auswerteeinheit 6 gesteuert.

Die Steuerung der optischen Shutter 41, 51 erfolgt derart, dass während der Zeitintervalle, innerhalb derer die Objektdetektion erfolgt, die Sendelichtstrahlen des Senders 4 entlang des Sendepfads 11 zur Durchführung der Objektdetektion geführt sind, wogegen mittels des optischen Shutters 51 der Referenz-Sendepfad 13 blockiert ist, das heißt, die Sendelichtstrahlen gelangen nicht zum Referenzobjekt 3. Während der Zeitintervalle, innerhalb derer die Referenzmessungen erfolgen, sind die optischen Shutter 41, 51 umgekehrt geschaltet, sodass die Sendelichtstrahlen nicht über den Sendepfad 11 sondern den Referenz-Sendepfad 13 geführt sind.

Die optischen Shutter 41, 51 können prinzipiell von schaltbaren elektromechanischen Elementen wie zum Beispiel Spiegeln, deren Auslenkungen elektrisch steuerbar sind, gebildet sein.

In den vorliegenden Ausführungsbeispielen bestehen die optischen Shutter 41, 51 aus elektrooptischen Elementen, die bevorzugt LCD-Elemente aufweisen. Insbesondere können die optischen Shutter aus elektrooptischen Ablenkeinrichtungen bestehen. Im vorliegenden Fall bestehen die optischen Shutter 41, 51 aus einem elektrooptisch schaltbaren Spiegel über welchen, je nach Schaltzustand des Spiegels, die Sendelichtstrahlen entlang des Sendepfads 11 oder des Referenz-Sendepfads 13 geführt sind.

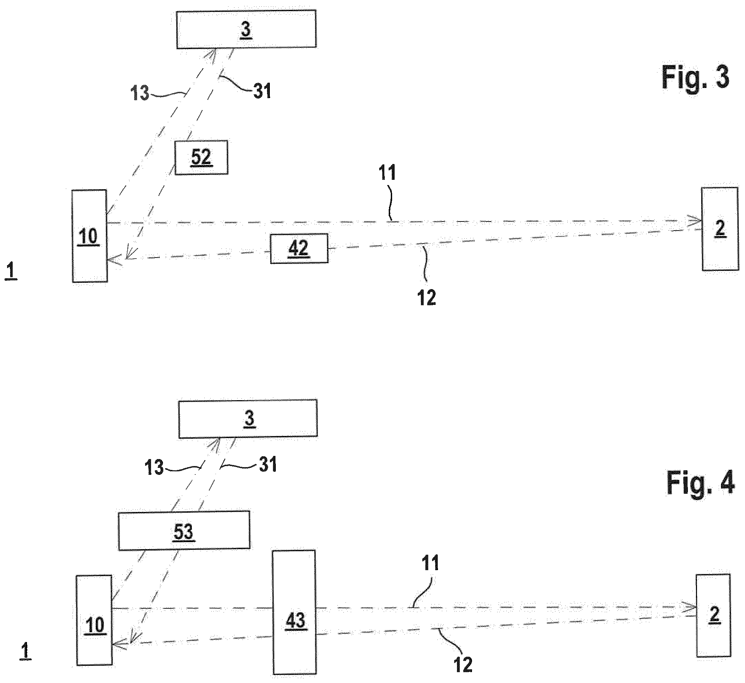

Die Ausführungsform gemäß Figur 3 unterscheidet sich von der Ausführungsform gemäß Figur 2 nur dadurch, dass nun als Umschaltmittel ein optischer Shutter 52 im Referenz-Empfangspfad 31 und ein weiterer optischer Shutter 42 im Empfangspfad 12 des optischen Sensors vorgesehen sind. Die optischen Shutter 42, 52 sind wieder von elektrooptischen Elementen gebildet.

Bei der Ausführungsform der Figur 3 ist die Strahlführung der Sendelichtstrahlen derart, dass ein erster Teil der Sendelichtstrahlen in den Überwachungsbereich geführt ist und den Sendepfad 11 bildet und dass ein zweiter Teil der Sendelichtstrahlen den Referenz-Sendepfad 13 bildet. Durch geeignetes Ansteuern der optischen Shutter 42, 52 wird wechselweise nur der Empfangspfad 12 oder der Referenz-Empfangspfad 31 blockiert.

Die Ausführungsform gemäß Figur 4 unterscheidet sich von der Ausführungsform gemäß Figur 2 nur dadurch, dass als Umschaltmittel ein optischer Shutter 53 im Referenz-Sendepfad 13 und im Referenz-Empfangspfad 31 und ein weiterer optischer Shutter 43 im Sendepfad 11 und im Empfangspfad 12 vorgesehen sind. Die optischen Shutter 43, 53 sind wieder von elektrooptischen Elementen gebildet. Durch entsprechendes Ansteuern der optischen Shutter wird wechselweise nur die Referenzstrecke oder nur die Messstrecke blockiert.

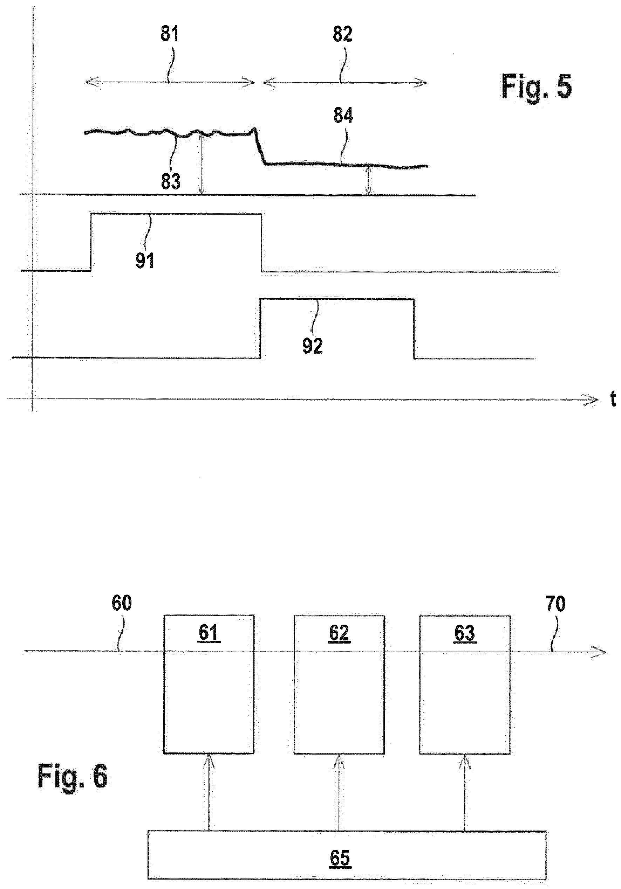

Figur 5 zeigt typischerweise zeitliche Signalverläufe für die Signalauswertung des optischen Sensors gemäß Figur 4. Wie aus Figur 5 ersichtlich, erfolgt während eines Messzyklus 81 die Detektion von Objekten 2, jedoch keine Referenzmessung. Während eines weiteren Messzyklus 82 erfolgt nur eine Referenzmessung, jedoch keine Objektdetektion. Dies wird erreicht durch geeignete Steuersignale 91, 92, die in der Auswerteeinheit 6 generiert werden. Mit dem ersten Steuersignal 91 erfolgt eine Ansteuerung der optischen Shutter 43, 53 derart, dass der optische Shutter 53 die Referenzstrecke blockiert und der optische Shutter 43 die Messstrecke für die Objektdetektion freigibt. Die dabei erhaltenen von einem so detektierten Objekt 2 stammenden Messsignale 83, das heißt Empfangssignale des Empfängers 5 werden in der Auswerteeinheit 6 zur Generierung des Objektfeststellungssignals ausgewertet.

Mit dem Steuersignal 92 erfolgt eine Ansteuerung der optischen Shutter 43, 53 derart, dass der optische Shutter 43 die Messstrecke blockiert und der optische Shutter 53 die Referenzstrecke zur Durchführung der Referenzmessung gegen das Referenzobjekt 3 freigibt. Die dabei als Empfangssignale des Empfängers 5 erhaltenen Referenzsignale 84 werden in der Auswerteeinheit 6 zur Durchführung von Funktionsprüfungen in der Auswerteeinheit 6 ausgewertet.

Figur 6 zeigt ein Ausführungsbeispiel eines optischen Shutters 51, 52 oder 53 der Ausführungsform der Figur 3. Der optische Shutter 51, 52 oder 53 weist im vorliegenden Fall drei hintereinander geschaltete Shutterelemente 61, 62, 63 auf, die von einer Ansteuerung 65, die in den Auswerteeinheiten 6 integriert ist, einzeln oder in Gruppen aktiviert werden können. Mit jedem Shutterelement erfolgt eine spezifische Dämpfung von Sendelichtstrahlen und/oder Empfangslichtstrahlen. Je nachdem, welcher oder welche Shutterelemente aktiviert sind, wird ein eingehender Lichtpfad 60 definiert gedämpft, das heißt die Lichtintensität des auszugehenden Lichtpfads 70 ist gegenüber der Lichtintensität des eingehenden Lichtpfads 60 um einen entsprechenden Dämpfungsfaktor reduziert.

### Bezugszeichenliste

- (1): Optischer Sensor
- (2): Objekt
- (3): Referenzobjekt
- (4): Sender
- (5): Empfänger
- (6): Auswerteeinheit
- (10): Sende-/Empfangseinheit
- (11): Sendepfad
- (12): Empfangspfad
- (13): Referenz-Sendepfad
- (31): Referenz-Empfangspfad
- (41): Optischer Shutter
- (42): Optischer Shutter
- (43): Optischer Shutter
- (51): Optischer Shutter
- (52): Optischer Shutter
- (53): Optischer Shutter
- (60): Lichtpfad
- (61): Shutterelement
- (62): Shutterelement
- (63): Shutterelement
- (65): Ansteuerung
- (70): Lichtpfad
- (81): Messzyklus
- (82): Messzyklus
- (83): Messsignale
- (84): Referenzsignale
- (91): Steuersignale
- (92): Steuersignale

## Patentansprüche

1. Optischer Sensor (1) mit einer Sende-/Empfangseinheit (10), welche einen einen Sendepfad (11) ausbildenden, Sendelichtstrahlen emittierenden Sender (4) und einen einen Empfangspfad (12) ausbildenden, Empfangslichtstrahlen empfangenden Empfänger (5) aufweist, wobei mit der Sende-/Empfangseinheit (10) eine Messstrecke zur Erfassung von Objekten (2) in einem Überwachungsbereich ausgebildet ist, **dadurch gekennzeichnet, dass** mit der Sende-/Empfangseinheit (10) eine Referenzstrecke ausgebildet ist, mittels derer durch Erfassung eines Referenzobjekts (3) eine Funktionsprüfung von Komponenten des optischen Sensors durchführbar ist, wobei die Referenzstrecke mittels eines elektrisch gesteuerten optischen Shutters zuschaltbar ist.

2. Optischer Sensor (1) nach Anspruch 1, **dadurch gekennzeichnet, dass** mittels des optischen Shutters der Sendepfad (11) und/oder der Empfangspfad (12) der Referenzstrecke zuschaltbar ist.

3. Optischer Sensor (1) nach einem der Ansprüche 1 oder 2, **dadurch gekennzeichnet, dass** ein weiterer optischer Shutter vorgesehen ist, mittels dessen die Messstrecke abschaltbar ist.

4. Optischer Sensor (1) nach Anspruch 3, **dadurch gekennzeichnet, dass** mittels des weiteren optischen Shutters die Messstrecke nur dann abgeschaltet ist, wenn mittels des optischen Shutters die Referenzstrecke zugeschaltet ist.

5. Optischer Sensor (1) nach einem der Ansprüche 3 oder 4, **dadurch gekennzeichnet, dass** mittels des weiteren optischen Shutters der Sendepfad (11) und/oder der Empfangspfad (12) der Messstrecke abschaltbar ist.

6. Optischer Sensor (1) nach einem der Ansprüche 1 - 5, **dadurch gekennzeichnet, dass** der oder jeder optische Shutter von einem elektrooptischen Element gebildet ist.

7. Optischer Sensor (1) nach Anspruch 6, **dadurch gekennzeichnet, dass** der oder jeder optische Shutter in Form eines elektrooptisch schaltbaren Spiegels ausgebildet ist.

8. Optischer Sensor (1) nach einem der Ansprüche 6 oder 7, **dadurch gekennzeichnet, dass** der oder jeder optische Shutter ein LCD-Element aufweist.

9. Optischer Sensor (1) nach Anspruch 6, **dadurch gekennzeichnet, dass** der oder jeder optische Shutter in Form einer elektrooptischen Ablenkeinrichtung ausgebildet ist.

10. Optischer Sensor (1) nach einem der Ansprüche 1 - 6, **dadurch gekennzeichnet, dass** der oder jeder optische Shutter ein schaltbares elektromechanisches Element aufweist.

11. Optischer Sensor (1) nach Anspruch 9, **dadurch gekennzeichnet, dass** das elektromechanische Element von einem Spiegel gebildet ist, dessen Auslenkung steuerbar ist.

12. Optischer Sensor (1) nach einem der Ansprüche 1 - 6, **dadurch gekennzeichnet, dass** der optische Shutter aus einer Anordnung von hintereinander geschalteten Shutterelementen besteht, welche jeweils als lichtdämpfende Elemente ausgebildet sind.

13. Optischer Sensor (1) nach einem der Ansprüche 1 - 12, **dadurch gekennzeichnet, dass** die Shutterelemente einzeln oder in Gruppen zuschaltbar sind.

14. Optischer Sensor (1) nach einem der Ansprüche 1 - 13, **dadurch gekennzeichnet, dass** mehrere separat zuschaltbare optische Shutter vorgesehen sind.

15. Optischer Sensor (1) nach einem der Ansprüche 1 - 14, **dadurch gekennzeichnet, dass** die Sende-/Empfangseinheit (10) nur einen Sender (4) aufweist, welcher Sendelichtstrahlen in einer fest vorgegebenen Raumrichtung in den Überwachungsbereich aussendet.

16. Optischer Sensor (1) nach einem der Ansprüche 1 - 14, **dadurch gekennzeichnet, dass** dieser als Lichtvorhang mit mehreren Paaren von Sendern (4) und Empfängern (5) ausgebildet ist, wobei jeweils ein Sender (4) und ein Empfänger (5) eine Messstrecke ausbilden.

17. Optischer Sensor (1) nach Anspruch 17, **dadurch gekennzeichnet, dass** den einzelnen Messstrecken einzeln nacheinander eine Referenzstrecke zugeschaltet ist.

18. Optischer Sensor (1) nach einem der Ansprüche 1 - 14, **dadurch gekennzeichnet, dass** die Sendelichtstrahlen des Senders (4) periodisch innerhalb des Überwachungsbereichs geführt sind.
